# EUROPEAN PATENT APPLICATION

(11) **EP 4 265 411 A1**
(43) Date of publication of application: **25.10.2023**
(21) Application number: 22871077.8
(22) Date of filing: 19.05.2022
(51) Int. Cl.: B32B 17/06, C03C 27/12, C03C 17/34, G02B 27/01

(54) **HEAD-UP DISPLAY GLASS AND HEAD-UP DISPLAY SYSTEM**

(71) Applicant: Fuyao Glass Industry Group Co., Ltd., Fuzhou, Fujian 350301 (CN)
(72) Inventor: The designation of the inventor has not yet been filed
(74) Representative: Mewburn Ellis LLP
(86) International application number: PCT/CN2022/093886
(87) International publication number: WO 2023/155316

(57) **Abstract**

Head-up display (HUD) glass and a head-up display system are provided in the disclosure. The Head-up display glass includes an outer surface and an inner surface opposite to the outer surface. A transparent nanofilm used for reflecting P-polarized light is disposed on the inner surface, and the transparent nanofilm includes a first high-refractive-index-layer, a second high-refractive-index-layer, a first low-refractive-index-layer, a third high-refractive-index-layer, and a second low-refractive-index-layer which are sequentially stacked on the inner surface. A refractive index of each of the first high-refractive-index-layer, the second high-refractive-index-layer, and the third high-refractive-index-layer is greater than 1.8, and a refractive index of each of the first low-refractive-index-layer and the second low-refractive-index-layer is less than or equal to 1.8. The technical solutions of the disclosure can solve the problem that a HUD image presented by the traditional head-up display glass is not clear, so that a driver or passenger can see a clearer HUD image, improving visual comfort and user experience.

## Description

### TECHNICAL FIELD

This disclosure relates to the field of display technology, in particular to head-up display glass and a head-up display system.

### BACKGROUND

Head-up display (HUD) systems are widely used in vehicles. The HUD system can display in real time a virtual HUD image in the field of vision of a driver, so that the driver can observe driving information such as speed, engine speed, fuel consumption, tire pressure, navigation, and information of external intelligent equipment without turning and/or bowing his/her head. The HUD system can greatly enhance driving safety and improve driving experience.

Currently, the HUD system generally includes a projection device and window glass. The window glass has an inner surface facing the interior of the vehicle and an outer surface facing the exterior of the vehicle. The projection device projects image information onto the inner surface of the window glass and the image information reflected by the window glass can enter into eyes of the driver. The conventional projection device mainly produces projection light containing S-polarized light, the projection light is reflected on the inner surface when it passes from air to glass, and also reflected on the outer surface when it passes from glass to air. As a result, two images offset with each other are generated, so-called ghosting, which results in an unclear HUD image and poor visual comfort.

### SUMMARY

Based on this, the disclosure provides head-up display (HUD) glass and a head-up display system, to solve the problem that a HUD image presented by the traditional head-up display glass is not clear, so that a driver or passenger can see a clearer HUD image, improving visual comfort and user experience.

In a first aspect, the disclosure provides head-up display glass. The Head-up display glass includes an outer surface and an inner surface opposite to the outer surface. A transparent nanofilm used for reflecting P-polarized light is disposed on the inner surface, and the transparent nanofilm includes a first high-refractive-index-layer, a second high-refractive-index-layer, a first low-refractive-index-layer, a third high-refractive-index-layer, and a second low-refractive-index-layer which are sequentially stacked on the inner surface. A refractive index of each of the first high-refractive-index-layer, the second high-refractive-index-layer, and the third high-refractive-index-layer is greater than 1.8, and a refractive index of each of the first low-refractive-index-layer and the second low-refractive-index-layer is less than or equal to 1.8.

In a possible implementation, the refractive index of the first high-refractive-index-layer is lower than the refractive index of the second high-refractive-index-layer, and a difference between the refractive index of the first high-refractive-index-layer and the refractive index of the second high-refractive-index-layer is greater than or equal to 0.3.

In a possible implementation, the head-up display glass has a reflectivity of at least 13% to P-polarized light emitted at an incident angle between 38° and 85°.

In a possible implementation, the head-up display glass has a reflectivity of at least 16% to P-polarized light emitted at an incident angle between 55° and 85°.

In a possible implementation, the head-up display glass has a reflectivity of at least 18% to P-polarized light emitted at an incident angle of 65°.

In a possible implementation, a reflectivity difference to P-polarized light emitted on the head-up display glass at an incident angle of 65° in a wavelength range of 460nm-630nm is less than or equal to 6%.

In a possible implementation, the first low-refractive-index-layer has a thickness between 130nm and 200nm, the third high-refractive-index-layer has a thickness between 20nm and 80nm, and the second low-refractive-index-layer has a thickness between 80nm and 130nm.

In a possible implementation, the first high-refractive-index-layer has a thickness between 25nm and 75nm, the first high-refractive-index-layer has a thickness between 85nm and 145nm, or the first high-refractive-index-layer has a thickness greater than or equal to 200nm.

In a possible implementation, the second high-refractive-index-layer has a thickness between 5nm and 35nm, the second high-refractive-index-layer has a thickness between 80nm and 145nm, or the second high-refractive-index-layer has a thickness between 190nm and 230nm.

In a possible implementation, the first high-refractive-index-layer has a thickness between 85nm and 145nm and the second high-refractive-index-layer has a thickness between 5nm and 35nm.

In a possible implementation, the first high-refractive-index-layer has a thickness between 85nm and 145nm and the second high-refractive-index-layer has a thickness between 190nm and 230nm.

In a possible implementation, the first high-refractive-index-layer has a thickness between 25nm and 75nm and the second high-refractive-index-layer has a thickness between 80nm and 145nm.

In a possible implementation, the first high-refractive-index-layer has a thickness between 25nm and 75nm and the second high-refractive-index-layer has a thickness between 190nm and 230nm.

In a possible implementation, the head-up display glass includes laminated glass, the laminated glass includes outer glass, inner glass, and an intermediate layer sandwiched between the outer glass and the inner glass, the outer surface is a surface of the outer glass away from the intermediate layer, the inner surface is a surface of the inner glass away from the intermediate layer, the outer glass is tinted glass and/or the intermediate layer is a colored intermediate layer, the head-up display glass has a visible light transmittance greater than or equal to 70%.

In a possible implementation, the head-up display glass further includes one or more of an anti-fingerprint film, a heat insulating film, and an electric heating film.

In a second aspect, the disclosure provides a head-up display system. The head-up display system includes the head-up display glass of the above and a projection device configured to emit projection light containing P-polarized light. A proportion of the P-polarized light in the projection light is greater than or equal to 80%, and the projection light is emitted on the transparent nanofilm at an incident angle between 38° and 85°.

In a possible implementation, the projection light is reflected on the transparent nanofilm to form a primary head-up display image, and reflected on the outer surface to form a secondary head-up display image, and a ratio of a reflectivity of the primary head-up display image to a reflectivity of the secondary head-up display image is greater than 10.

In a possible implementation, the ratio of the reflectivity of the primary head-up display image to the reflectivity of the secondary head-up display image is greater than 480 when the projection light is emitted on the head-up display glass at an incident angle of 55°.

In a possible implementation, the ratio of the reflectivity of the primary head-up display image to the reflectivity of the secondary head-up display image is greater than 45 when the projection light is emitted on the head-up display glass at an incident angle of 65°.

In a possible implementation, when the light of a D65 light source is emitted on the head-up display glass at an incident angle of 65° and measured from the outer surface, a reflected color of the head-up display glass has a value of a less than or equal to 1 and a value of b less than or equal to 2.5 in a color space Lab.

According to the head-up display glass and the head-up display system of the disclosure, the head-up display glass of the disclosure can well replace the traditional head-up display glass adopting a wedge-shaped intermediate layer, to obtain a clear HUD image without visual ghosting and with a high ratio of reflectivity, and can also meet the using requirements of drivers wearing sunglasses, and can cooperate with projection light at an incident angle between 38° and 85°, and can meet the using requirements of augmented reality-HUD (AR-HUD) with a field of view greater than or equal to 10°, to realize image display with longer distance and larger size, further improving visual comfort and user experience.

### BRIEF DESCRIPTION OF THE DRAWINGS

To illustrate technical solutions of the disclosure more clearly, a brief description of drawings required in embodiments will be given below. Apparently, the drawings described below are some implementations of the disclosure, and for those of ordinary skill in the art, other drawings may be obtained without creative effort according to these drawings.
FIG. 1 is a schematic structural diagram of a vehicle provided in embodiments of the disclosure.
FIG. 2 is a schematic structural diagram of a head-up display system provided in embodiments of the disclosure.
FIG. 3 is a schematic structural diagram of head-up display glass provided in embodiments of the disclosure.
FIG. 4 is a schematic structural diagram of a transparent nanofilm provided in embodiments of the disclosure.

### DETAILED DESCRIPTION

The following will describe specific embodiments of the disclosure in more detail with reference to accompanying drawings. Although exemplary embodiments of the disclosure are shown in the accompanying drawings, it should be understood that the disclosure may also be implemented in other ways than those described herein and therefore the disclosure is not limited to the following embodiments.

For ease of understanding, terms referred to in the embodiments of the disclosure are first explained.

### Thickness: physical thickness.

Refractive index: refractive index of transmitted light at 550nm wavelength.

Incident angle: an angle between the projection light emitted by the projection device and the normal of the surface at an incident position when the projection light is emitted on the head-up display glass.

The disclosure provides head-up display (HUD) glass and a head-up display system, which can solve the problem that a HUD image presented by the traditional head-up display glass is unclear and the like, so that the driver or the passenger can see a clearer HUD image. The traditional head-up display glass adopts a wedge-shaped intermediate layer to eliminate ghosting, which has disadvantages of high material cost, high process difficulty, and poor applicability due to the need to design different wedge-shaped angles for different types of vehicles. The head-up display glass provided in the disclosure can well replace the traditional head-up display glass. Further, the traditional head-up display glass can only be used with projection light whose incident angle is in a range of 60°-70°, and accordingly, a field of view (FOV) of a HUD image generated is usually less than 5°, which can only realize short-distance and small-size image display. With the increase of the range of the incident angle, the ghosting of projecting image reflected by the traditional head-up display glass becomes more and more serious, and the ghosting cannot be solved completely only with aid of the wedge-shaped intermediate layer. Compared with the traditional head-up display glass, the head-up display glass provided in the disclosure can also be used with projection light with an incident angle between 38° and 85°, and can meet use of augmented reality-head up display (AR-HUD) with a field of view greater than or equal to 10°, to realize image display with longer distance and larger size, further improving visual comfort and user experience.

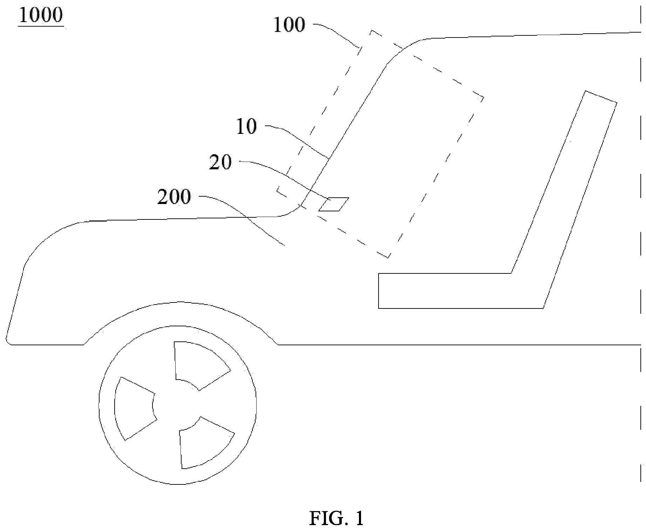

Referring to FIG. 1, the vehicle 1000 includes a vehicle body 200 and a head-up display system 100. The head-up display system 100 is connected with the vehicle body 200. The head-up display system 100 includes a projection device 20 and head-up display glass 10.

It should be noted that, FIG. 1 schematically describes the connection relationship between the vehicle body 200 and the head-up display system 100, and is not to specifically limit the connection position, specific configuration, and quantity of each device. The schematic structure of embodiments of the disclosure does not constitute a specific limitation to the vehicle 1000. In other embodiments of the disclosure, the vehicle 1000 may include more or fewer components than illustrated, or combine or split certain components, or have different component arrangements. The illustrated components may be implemented in hardware, software, or a combination of software and hardware.

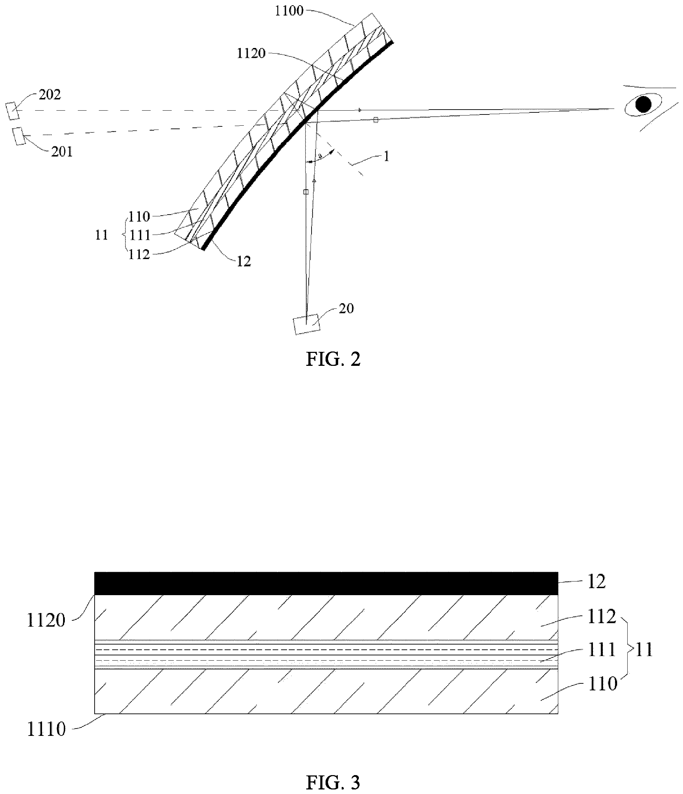

The head-up display glass 10 may be a front windshield of the vehicle 1000 and the projection device 20 may be disposed in the vehicle. Referring to FIG. 2, the projection device 20 emits projection light towards the head-up display glass 10, and after the projection light is reflected by head-up display glass 10, an image presented is received by eyes. The angle a between the center line of the projection beam emitted by the projection device 20 and the normal 1 of the surface at the incident position of the head-up display glass 10 ranges from 38° to 85° (including values 38° and 85°). To avoid using the wedge-shaped intermediate layer with a larger wedge angle, the projection light emitted by the projection device 20 contains P-polarized light, and a proportion of the P-polarized light in the projection light is greater than or equal to 80%, preferably the proportion of the P-polarized light is greater than or equal to 90%, more preferably the proportion of the P-polarized light is greater than or equal to 95%, and even the proportion of the P-polarized light is 100% (i.e. the projection light is pure P-polarized light). In the disclosure, the P-polarized light is used for a part of the projection light. When emitted on the glass-air interface, the P-polarized light has a low reflectivity. Especially when the incident angle is Brewster's angle *θ*_{B}, there will be basically no reflection. Further, the transparent nanofilm can reflect a part of the P-polarized light. As such, visual ghosting can be completely eliminated. Compared with the conventional head-up display glass which can only be used with projection light of S-polarized light, the improved head-up display glass and head-up display system of the disclosure can meet the using requirements of drivers wearing sunglasses.

It can be understood that, the head-up display glass provided in the disclosure can also be used with the projection light at the incident angle between 38° and 85°, which greatly enlarges the range of the incident angle of the projection light. As such, the projection device 20 can emit the projection light to a larger region on the head-up display glass 10, and the projection light can be reflected by the head-up display glass 10 to be imaged, and even the projection light emitted by the projection device 20 can be reflected on the whole region on the head-up display glass 10 to be imaged. When the incident angle of the projection light emitted on the head-up display glass 10 is 38° or 85°, the head-up display glass 10 still can cooperate with the projection light to generate the clear HUD image with good display effect.

Referring to FIG. 3, the head-up display glass 10 includes laminated glass 11 and a transparent nanofilm 12. The laminated glass 11 includes an inner surface 1120 and an outer surface 1100 opposite to the inner surface 1120. The inner surface 1120 is a surface facing the interior of the vehicle when the laminated glass 11 is mounted on the vehicle 1000. The transparent nanofilm 12 is disposed on the inner surface 1120. Exemplarily, a visible light transmittance of the head-up display glass 10 is greater than or equal to 70% when the visible light is perpendicular to the head-up display glass 10, which satisfies regulatory requirements for a front windshield of the vehicle 1000.

Referring again to FIG. 2, depositing the transparent nanofilm 12 on the inner surface 1120 of the laminated glass 11 can increase the reflection of the head-up display glass to the P-polarized light, so that the P-polarized light is reflected at a higher reflectivity when emitted on the transparent nanofilm 12 to form a primary head-up display image 201. On the other hand, P-polarized light entering into the laminated glass is reflected at a lower reflectivity on the outer surface 1100 of the laminated glass 11 when it passes from glass to air, and forms a secondary head-up display image 202. The P-polarized light forming the secondary head-up display image 202 will be absorbed by the laminated glass and reflected by the transparent nanofilm 12 again, which further reduce the reflectivity of the secondary head-up display image 202. As such, a clear HUD image without visual ghosting and with a high ratio of reflectivity can be obtained.

It should be noted that, the laminated glass 11 used as the front windshield is usually in a curved shape. However, the shape of the laminated glass 11 is not limited to the shape described above, which may be any shape satisfying the using requirements of the window glass, for example, the laminated glass 11 may also be in a straight plate shape. The shape of the laminated glass 11 is not limited in embodiments of the disclosure. Exemplarily, the laminated glass 11 has a vertical radius of curvature in the direction from the bottom edge to the top edge. To facilitate the design and production of the head-up display glass 10, the vertical radius of curvature is between 4000mm and 20000mm.

The laminated glass 11 includes outer glass 110, inner glass 112, and an intermediate layer 111 sandwiched between the outer glass 110 and the inner glass 112. The outer surface 1100 is a surface of the outer glass 110 away from the intermediate layer 111 and the inner surface 1120 is a surface of the inner glass 112 away from the intermediate layer 111. The transparent nanofilm 12 is disposed on the inner surface 1120 of the inner glass 112. Exemplarily, the outer glass 110 and the inner glass 112 may be clear glass or tinted glass such as green glass, gray glass, or the like, but the visible light transmittance of each of the outer glass 110 and the inner glass 112 is required to be greater than or equal to 70%. The outer glass 110 and the inner glass 112 may be made of soda-lime-silicate, borosilicate, aluminosilicate, or the like. The thickness of the outer glass 110 can be between 1.5mm and 3.5mm, for example, 1.6mm, 1.8mm, 2.1mm, 2.5mm, 3.0mm, 3.5mm, etc. The thickness of the inner glass 112 can be between 0.7mm and 2. 5mm, for example, 0.7mm, 0.9mm, 1.1mm, 1.6mm, 2.1mm, 2.5mm, etc. Exemplarily, the thickness of the inner glass 112 is less than the thickness of the outer glass 110, for example, the thickness of the outer glass 110 is at least 0.3mm greater than the thickness of the inner glass 112. By adopting thinner inner glass 112, a laminated glass structure of asymmetric thickness can be formed. As such, the intensity of the head-up display glass can be improved to some extent while reducing the total thickness of the head-up display glass to achieve lightweight, further improving the quality of the head-up display image.

The intermediate layer 111 is used for bonding the outer glass 110 with the inner glass 112, so that the head-up display glass 10 has a sandwich structure, to improve the safety of the head-up display glass 10, so that the head-up display glass meets the safety standards and regulations of window glass for vehicles. The intermediate layer 111 can be made of polyvinyl butyral (PVB), ethylene vinyl acetate (EVA), thermoplastic urethane (TPU), ionic polymer film (SGP), etc. Exemplarily, the intermediate layer 111 may be a single-layer structure or a multi-layer structure. The multi-layer structure may be exemplified as a double-layer structure, a three-layer structure, a four-layer structure, a five-layer structure, and the like. The intermediate layer 111 may also have other functions such as providing at least one colored region as a shadow band to reduce the interference of sunlight to the eyes, or adding an infrared absorber to have a sunscreen or heat insulation function, or adding an ultraviolet absorber to have an ultraviolet insulation function, or at least one layer of the multi-layer structure has a higher plasticizer content to have a sound insulation function. To eliminate ghosting, the traditional head-up display glass usually uses a wedge-shaped intermediate layer with a wedge angle of at least 0.3mrad, which makes it difficult to design, produce, and debug the head-up display system. In the head-up display glass provided in the disclosure, a general intermediate layer with uniform thickness is adopted to directly replace the wedge-shaped intermediate layer. It is to be understood that, in the disclosure, a wedge-shaped intermediate layer with a smaller wedge angle can be selected, for example, a wedge-shaped intermediate layer with a wedge angle between 0.01mrad and 0.15mrad such as 0.01mard, 0.02mrad, 0.03mrad, 0.04mrad, 0.05mrad, 0.06mrad, 0.07mrad, 0.08mrad, 0.09mrad, 0.10mrad, 0.11mrad, 0.12mrad, 0.13mrad, 0.14mrad, 0.15mrad, or the like, which can further eliminate the perspective ghosting of objects in the external environment of the vehicle generated due to the head-up display glass. The wedge-shaped intermediate layer with a smaller wedge angle can be obtained through a simple stretching process, as such the reflective ghosting and perspective or see-through ghosting can be eliminated at the same time in a low cost way, to obtain the head-up display image and observation effect of high quality. The intermediate layer 111 may be a transparent intermediate layer or a colored intermediate layer, which has a visible light transmittance greater than or equal to 80%, preferably greater than or equal to 85%, more preferably greater than or equal to 90%. The thickness of the intermediate layer 111 can be between 0.38mm and 1.6mm, for example, 0.38mm, 0.5mm, 0.76mm, 1.14mm, 1.52mm, 1.6mm, etc.

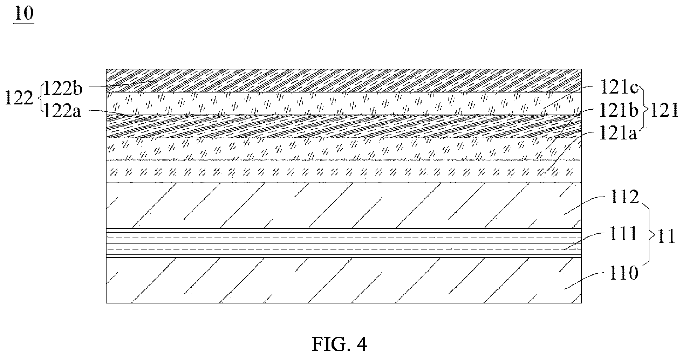

Referring to FIG. 4, the transparent nanofilm 12 includes a high-refractive-index-layer 121 and a low-refractive-index-layer 122. A refractive index of the high-refractive-index-layer 121 is greater than 1.8, preferably greater than or equal to 1.85, more preferably greater than or equal to 1.9. A refractive index of the low-refractive-index-layer 122 is less than or equal to 1.8, preferably less than or equal to 1.7, more preferably less than or equal to 1.6. Exemplarily, the transparent nanofilm 12 includes a first high-refractive-index-layer 121a, a second high-refractive-index-layer 121b, a first low-refractive-index-layer 122a, a third high-refractive-index-layer 121c, and a second low-refractive-index-layer 122b sequentially deposited on the inner surface 1120. By designing the matching first high-refractive-index-layer 121a, second high-refractive-index-layer 121b, first low-refractive-index-layer 122a, third high-refractive-index-layer 121c, and second low-refractive-index-layer 122b, the head-up display glass a reflectivity of at least 13% to P-polarized light emitted at an incident angle between 38° and 85°, which can meet the requirements of larger FOV and even AR-HUD, and make optical performance, mechanical performance, and apparent color of the transparent nanofilm 12 meet the comprehensive requirements of the window glass for vehicles.

The high-refractive-index-layer 121 can be made of at least one of an oxide or a nitride or a nitrogen oxide of Zr, Nb, Si, Sb, Sn, Zn, In, Al, Ni, Cr, Mg, Mn, V, W, Hf, Ta, Mo, Ga, Y, Bi, Ta. The high-refractive-index-layer 121 includes the first high-refractive-index-layer 121a, the second high-refractive-index-layer 121b, and the third high-refractive-index-layer 121c. Specifically, each of the first high-refractive-index-layer 121a, the second high-refractive-index-layer 121b, and the third high-refractive-index-layer 121c has a refractive index greater than 1.8, preferably greater than or equal to 1.9. To better make the optical performance, mechanical performance, and apparent color of the transparent nanofilm 12 meet the comprehensive requirements of the window glass for vehicles, the refractive index of the first high-refractive-index-layer 121a is preferably between 1.9 and 2.2, for example, 1.9, 2.0, 2.1, 2.2, etc. To better make the optical performance, mechanical performance, and apparent color of the transparent nanofilm 12 meet the comprehensive requirements of the window glass for vehicles, each of the refractive index of the second high-refractive-index-layer 121b and the refractive index of the third high-refractive-index-layer 121c is preferably greater than 2.2, more preferably greater than or equal to 2.3, or even more preferably greater than or equal to 2.4, for example, 2.5, 2.65, 2.72, and the like. The first high-refractive-index-layer 121a can be made of zinc tin oxide (ZnSnOₓ), magnesium doped zinc tin oxide (ZnSnMgOₓ), titanium doped zinc tin oxide (ZnSnTiOₓ), zirconium doped zinc tin oxide (ZnSnZrOₓ), silicon aluminum nitride (SiAlNₓ), silicon zirconium nitride (SiZrNₓ), silicon zirconium oxide (SiAlONₓ), silicon zirconium oxide (SiZrONₓ), silicon nitride (SiNₓ), zirconium oxide (ZrOₓ), zinc oxide (ZnOxₓ), aluminum doped zinc oxide (AZO), hafnium doped and aluminum zinc oxide (HAZO), yttrium doped zinc oxide (YZO), or gallium doped zinc oxide (GZO). Each of the second high-refractive-index-layer 121b and the third high-refractive-index-layer 121c can be made of titanium oxide (TiOₓ), niobium oxide (Nb₂O₅), silicon zirconium nitride (SiZrNₓ). The value of x can be determined according to the stoichiometric, sub-stoichiometric, or super-stoichiometric deposition in the magnetron sputtering process.

The low-refractive-index-layer 122 can be made of at least one of an oxide or a nitride or a carbide or a fluoride of Si, Al, Mg, Zr. The low-refractive-index-layer 122 includes the first low-refractive-index-layer 122a and the second low-refractive-index-layer 122b. Specifically, each of the refractive index of the first low-refractive-index-layer 122a and the refractive index of the second low-refractive-index-layer 122b is equal to or less than 1.8, preferably less than or equal to 1.7, more preferably less than or equal to 1.6, which can be exemplified as 1.52, 1.50, 1.47, 1.38, etc. Each of the first low-refractive-index-layer 122a and the second low-refractive-index-layer 122b may be made of silicon oxide (SiO₂), alumina (Al₂O₃), magnesium oxide (MgO), or magnesium fluoride (MgF).

To obtain a HUD image with a high ratio of reflectivity, in the disclosure, the head-up display glass 10 has a reflectivity of at least 13% to P-polarized light emitted at an incident angle between 38° and 85°. Preferably, the head-up display glass 10 has a reflectivity of at least 16% to P-polarized light emitted at an incident angle between 55° and 85°. More preferably, the head-up display glass has a reflectivity of at least 18% or at least 20% or at least 22% or at least 24% to P-polarized light emitted at an incident angle of 65°. This facilitates commercialization of the head-up display glass.

In some implementations, the refractive index of the first high-refractive-index-layer 121a is lower than the refractive index of the second high-refractive-index-layer 121b, and a difference between the refractive index of the first high-refractive-index-layer 121a and the refractive index of the second high-refractive-index-layer 121b is greater than or equal to 0.3. The difference can be exemplified as 0.3, 0.4, 0.5, 0.6, 0.7, 0.8, 0.9, etc. By designing the matching refractive indexes of the first high-refractive-index-layer 121a and the second high-refractive-index-layer 121b, the reflection spectrum of the head-up display glass 10 to P-polarized light can be smoother on the basis of obtaining a HUD image with a high ratio of reflectivity. Specifically, a reflectivity difference to P-polarized light emitted on the head-up display glass at an incident angle of 65° in a wavelength range of 460nm-630nm is less than or equal to 6%, preferably less than or equal to 5%, more preferably less than or equal to 3%, or even less than or equal to 2%, thereby achieving display in neutral color of the HUD image as much as possible.

In some implementations, the first low-refractive-index-layer 122a has a thickness between 130nm and 200nm, the third high-refractive-index-layer 121c has a thickness between 20nm and 80nm, the second low-refractive-index-layer 122b has a thickness between 80nm and 130nm. In some implementations, the first high-refractive-index-layer 121a has a thickness between 25nm and 75nm, or between 85nm and 145nm, or not less than 200nm. In some implementations, the second high-refractive-index-layer 121b has a thickness between 5nm and 35nm, or between 80nm and 145nm, or between 190nm and 230nm. By designing the matching thicknesses of the first high-refractive-index-layer 121a, the second high-refractive-index-layer 121b, the first low-refractive-index-layer 122a, the third high-refractive-index-layer 121c, and the second low-refractive-index-layer 122b, the HUD image can meet the comprehensive requirements such as a high ratio of reflectivity, display in neutral color as much as possible, and a larger field of view, and head-up display glass can have an excellent apparent color.

In some implementations, the first high-refractive-index-layer 121a has the thickness between 85nm and 145nm and the second high-refractive-index-layer 121b has the thickness between 5nm and 35nm.

In some implementations, the first high-refractive-index-layer 121a has the thickness between 85nm and 145nm and the second high-refractive-index-layer 121b has the thickness between 190nm and 230nm.

In some implementations, the first high-refractive-index-layer 121a has the thickness between 25nm and 75nm and the second high-refractive-index-layer 121b has the thickness between 80nm and 145nm.

In some implementations, the first high-refractive-index-layer 121a has the thickness between 25nm and 75nm and the second high-refractive-index-layer 121b has the thickness between 190nm and 230nm.

In some implementations, the outer glass 110 is the tinted glass and/or the intermediate layer 111 is the colored intermediate layer. The tinted glass and the colored intermediate layer can absorb more P-polarized light, which may further reduce the reflectivity of the secondary head-up display image 202 and thus greatly improve the ratio of the reflectivity of the primary head-up display image 201 to the reflectivity of the secondary head-up display image 202.

Referring again to FIG. 2, the disclosure further provides a head-up display system 100. The head-up display system includes a projection device 20 and the above head-up display glass 10. The projection device 20 is for emitting projection light containing P-polarized light. A proportion of the P-polarized light in the projection light is greater than or equal to 80%, and the projection light is emitted on the transparent nanofilm 12 at an incident angle between 38° to 85°.

In some implementations, the projection light is reflected on the transparent nanofilm 12 to form a primary head-up display image 201, and reflected on the outer surface 1100 to form a secondary head-up display image 202, and a ratio of a reflectivity of the primary head-up display image 201 to a reflectivity of the secondary head-up display image 202 is greater than 10. As such, a clear HUD image can still be obtained even when the projection light is emitted on the transparent nanofilm 12 at an incident angle of 38° or 85°, which can satisfy the use of larger field of view and even the AR-HUD.

In some implementations, the ratio of the reflectivity of the primary head-up display image to the reflectivity of the secondary head-up display image is greater than 480 when the projection light is emitted at an incident angle of 55°.

In some implementations, the ratio of the reflectivity of the primary head-up display image to the reflectivity of the secondary head-up display image is greater than 45 when the projection light is emitted at an incident angle of 65°.

In some implementations, when the light of a D65 light source is emitted on the head-up display glass at an incident angle of 65° and measured from the outer surface, a reflected color of the head-up display glass has a value of a less than or equal to 1 and a value of b less than or equal to 2.5 in a color space Lab. As such, the head-up display glass have an excellent apparent color.

The projection device 20 is used for outputting relevant text and image information such as speed, engine revolution, fuel consumption, tire pressure, dynamic navigation, night vision, real scene map, etc. onto the head-up display glass 10, to be observed by an observer in the vehicle, to realize the HUD or even the AR-HUD. The projection device 20 is a device known to those skilled in the art including, but not limited to, a laser, a light emitting diode (LED), a liquid crystal display (LCD), a digital light processing (DLP), an electroluminescence (EL), a cathode ray tube (CRT), a vacuum fluorescent display (VFD), a collimating mirror, a spherical correcting mirror, a convex lens, a concave lens, a reflector, and/or a polarizing mirror, etc. Further, the position and incident angle of the projection device 20 are adjustable to suit observers at different positions or heights in the vehicle.

In some implementations, the head-up display glass 10 may also include one or more of an anti-fingerprint film, a heat insulating film, and an electrical heating film.

The anti-fingerprint film may be disposed on the transparent nanofilm 12 and cover at least part of the transparent nanofilm 12, to prevent contamination of the transparent nanofilm 12 by fingerprints or the like, to ensure higher quality of head-up display.

The heat insulating film may be disposed on a surface of the outer glass 110 close to the intermediate layer 111 and/or a surface of the inner glass 112 close to the intermediate layer 111. The heat insulating film may be one or more of a single silver heat insulating film, a double silver heat insulating film, a three silver heat insulating film, a four silver heat insulating film, or a transparent conductive oxide (TCO) heat insulating film. The single silver heat insulating film, the double silver heat insulating film, the three silver heat insulating film, the four silver heat insulating film, or the TCO heat insulating film respectively refers to a transparent nano heat insulating film having one silver layer, two silver layers, three silver layers, four silver layers, or a TCO layer. Besides the silver layer or TCO layer, the transparent nano heat insulating film also includes at least two dielectric layers. The dielectric layer can be used to protect the silver layer or TCO layer and adjust the optical performance and apparent color of the heat insulating film, and the like. With the heat insulating film, the vehicle can be more comfortable to ride. The single silver heat insulating film, the double silver heat insulating film, the three silver heat insulating film, the four silver heat insulating film, or the TCO heat insulating film can be directly disposed on the surface of the outer glass 110 close to the intermediate layer 111 and/or the surface of the inner glass 112 close to the intermediate layer 111 through a magnetron sputtering deposition process.

The electric heating film may be disposed on the surface of the outer glass 110 near the intermediate layer 111 and/or the surface of the inner glass 112 near the intermediate layer 111. The electric heating film may be any of a double silver electric heating film, a three silver electric heating film, a four silver electric heating film, a five silver electric heating film. By setting at least two bus bars in the laminated glass, the current of the power supply can be inputted into the electric heating film, so that the electric heating film can heat the laminated glass to realize functions of defrosting, defogging, and even deicing and snow removal, further improving the driving safety. The double silver electric heating film, the three silver electric heating film, the four silver electric heating film, or the five silver electric heating film respectively refers to a transparent nano conductive film with two silver layers, three silver layers, four silver layers, or five silver layers. Besides the silver layer, the transparent nano conductive film also includes at least two dielectric layers. The dielectric layer can be used to protect the silver layer and adjust the optical performance and apparent color of the electric heating film. The electric heating film may be directly disposed on the surface of the outer glass 110 near the intermediate layer 111 and/or on the surface of the inner glass 112 near the intermediate layer 111 through a magnetron sputtering deposition process.

### Comparative examples 1-3 and embodiments 1-6

The outer glass 110, the intermediate layer 111, and the inner glass 112 are prepared, where the outer glass 110 is green glass with a thickness of 2.1mm, the intermediate layer 111 is transparent PVB with uniform thickness, and the inner glass 112 is clear glass with a thickness of 1.6mm. The transparent nanofilm of each of comparative examples 1-3 and embodiments 1-6 is deposited on the inner surface 1120 of the inner layer glass 112 through a magnetron sputtering process, which are then processed and manufactured according to the production process for vehicle glass, to obtain the head-up display glass of comparative examples 1-3 and embodiments 1-6.

### Comparative example 1

The transparent nanofilm has a double-layer structure, where a TiOx high-refractive-index-layer with a thickness of 64.8nm and a SiO₂ low-refractive-index-layer with a thickness of 131.5nm are deposited on the inner surface 1120 sequentially.

### Comparative example 2

The transparent nanofilm has a three-layer structure, where a TiOx high-refractive-index-layer with a thickness of 45.5nm, a ZnSnOx high-refractive-index-layer with a thickness of 25.0nm, and a SiO₂ low-refractive-index-layer with a thickness of 93.0nm are deposited on the inner surface 1120 sequentially. The refractive index of the TiOx high-refractive-index-layer is higher than that of the ZnSnOx high-refractive-index-layer.

### Comparative example 3

The transparent nanofilm has a four-layer structure, where a ZnSnOx high-refractive-index-layer with a thickness of 10.9nm, a SiO₂ low-refractive-index-layer with a thickness of 172.4nm, a TiOx high-refractive-index-layer with a thickness of 63.5nm, and a SiO₂ low-refractive-index-layer with a thickness of 101.3nm are sequentially deposited on the inner surface 1120.

### Embodiment 1

The transparent nanofilm 12 has a five-layer structure, where a first high-refractive-index-layer 121a (ZnSnMgOx) with a thickness of 107.6nm, a second high-refractive-index-layer 121b (TiOx) with a thickness of 18.8nm, a first low-refractive-index-layer 122a (SiO₂) with a thickness of 178.3nm, a third high-refractive-index-layer 121c (TiOx) with a thickness of 43.3nm, and a second low-refractive-index-layer 122b (SiO₂) with a thickness of 113.2nm are sequentially deposited on the inner surface 1120. The refractive index of first high-refractive-index-layer 121a (ZnSnMgOx) is lower than that of second high-refractive-index-layer 121b (TiOx).

### Embodiment 2

The transparent nanofilm 12 has a five-layer structure, where a first high-refractive-index-layer 121a (ZnSnOx) with a thickness of 43.7nm, a second high-refractive-index-layer 121b (TiOx) with a thickness of 93nm, a first low-refractive-index-layer 122a (SiO₂) with a thickness of 154.3nm, a third high-refractive-index-layer 121c (TiOx) with a thickness of 49.1nm, and a second low-refractive-index-layer 122b (SiO₂) with a thickness of 100nm are sequentially deposited on the inner surface 1120. The refractive index of the first high-refractive-index-layer 121a (ZnSnOx) is smaller than that of the second high-refractive-index-layer 121b (TiOx).

### Embodiment 3

The transparent nanofilm 12 has a five-layer structure, where a first high-refractive-index-layer 121a (ZnSnOx) with a thickness of 72nm, a second high-refractive-index-layer 121b (TiOx) with a thickness of 199.8nm, a first low-refractive-index-layer 122a (SiO₂) with a thickness of 167nm, a third high-refractive-index-layer 121c (TiOx) with a thickness of 28.2nm, and a second low-refractive-index-layer 122b (SiO₂) with a thickness of 125.9nm are sequentially deposited on the inner surface 1120. The refractive index of the first high-refractive-index-layer 121a (ZnSnOx) is lower than that of the second high-refractive-index-layer 121b (TiOx).

### Embodiment 4

The transparent nanofilm 12 has a five-layer structure, where a first high-refractive-index-layer 121a (ZnSnMgOx) with a thickness of 118nm, a second high-refractive-index-layer 121b (TiOx) with a thickness of 11.9nm, a first low-refractive-index-layer 122a (SiO₂) with a thickness of 177.9nm, a third high-refractive-index-layer 121c (TiOx) with a thickness of 52.2nm, and a second low-refractive-index-layer 122b (SiO₂) with a thickness of 103.6nm are sequentially deposited on the inner surface 1120. The refractive index of the first high-refractive-index-layer 121a (ZnSnMgOx) is lower than that of the second high-refractive-index-layer 121b (TiOx).

### Embodiment 5

The transparent nanofilm 12 has a five-layer structure, where a first high-refractive-index-layer 121a (SiAINx) with a thickness of 226.9nm, a second high-refractive-index-layer 121b (TiOx) with a thickness of 91.1nm, a first low-refractive-index-layer 122a (SiO₂) with a thickness of 161.5nm, a third high-refractive-index-layer 121c (TiOx) with a thickness of 36.6nm, and a second low-refractive-index-layer 122b (SiO₂) with a thickness of 114nm are sequentially deposited on the inner surface 1120. The refractive index of the first high-refractive-index-layer 121a (SiAINx) is lower than that of the second high-refractive-index-layer 121b (TiOx).

### Embodiment 6

The transparent nanofilm 12 has a five-layer structure, where a first high-refractive-index-layer 121a (ZnSnOx) with a thickness of 51.5nm, a second high-refractive-index-layer 121b (TiOx) with a thickness of 199.8nm, a first low-refractive-index-layer 122a (SiO₂) with a thickness of 167nm, a third high-refractive-index-layer 121c (TiOx) with a thickness of 28.2nm, and a second low-refractive-index-layer 122b (SiO₂) with a thickness of 125.9nm are sequentially deposited on the inner surface 1120. The refractive index of the first high-refractive-index-layer 121a (ZnSnOx) is lower than that of the second high-refractive-index-layer 121b (TiOx).

The head-up display system includes the head-up display glass of comparative examples 1-3 and embodiments 1-6 and the projection device. The projection device emits projection light containing at least 99% P-polarized light. The projection light is emitted on the transparent nanofilm at an incident angle between 38° and 85°. The position of the projection device and the incident angle of the projection light are adjusted, so that the head-up display image that can be observed by the observer is the clearest. A reflectivity (Rp), a ratio of reflectivity of primary image to reflectivity of secondary image (C), a visible light transmittance (TL), reflected color (a and b), and the like are measured and calculated.

Reflectivity (Rp): the reflectivity of the head-up display glass to projection light emitted at an incident angle of 38°, 45°, 55°, 65°, 75°, and 85° is measured and calculated according to international organization for standardization (ISO) 9050, from the inner surface.

Reflectivity difference (Range): the maximum reflectivity and the minimum reflectivity to projection light emitted at an incident angle of 65° in the wavelength range of 460nm-630nm are measured, from the inner surface, where a difference between the maximum reflectivity and the minimum reflectivity is the reflectivity difference.

Ratio of reflectivity of primary image to reflectivity of secondary image (C): the reflectivity of the primary head-up display image and the reflectivity of the secondary head-up display image emitted by the projection light at an incident angle of 38°, 45°, 55°, 65°, 75°, and 85° is measured and calculated according to ISO 9050, from the inner surface, and C is calculated according to "ratio of reflectivity of primary image to reflectivity of secondary image = reflectivity of primary head-up display image/ reflectivity of secondary head-up display image".

Visible light transmittance (TL): calculated according to ISO9050.

Reflected color (a and b): when the light of a D65 light source is emitted on the head-up display glass at an incident angle of 65° and measured from the outer surface, the value of a and the value of b are calculated according to CIE (International Commission on illumination) Lab color space, based on D65 light source and a field of view of 10°, where a indicates red-green value and b value indicates yellow-blue value.

The measurement results of comparative examples 1-3 and embodiments 1-2 are illustrated in Table 1.

**Table 1: measurement results of head-up display glass of comparative examples 1-3 and embodiments 1-2**

| | | comparative example 1 | comparative example 2 | comparative example 3 | embodiment 1 | embodiment 2 |
|---|---|---|---|---|---|---|
| reflectivity (Rp) | incident angle =38° | 9.64% | 9.29% | 12.96% | 14.55% | 15.26% |
| | incident angle =45° | 9.62% | 9.15% | 13.13% | 15.23% | 16.08% |
| | incident angle =55° | 11.33% | 10.73% | 15.12% | 18.41% | 18.99% |
| | incident angle =65° | 17.55% | 16.89% | 21.35% | 26.18% | 26.05% |
| | incident angle =75° | 34.42% | 33.88% | 37.57% | 43.10% | 42.44% |
| | incident angle =85° | 71.15% | 70.91% | 72.62% | 75.79% | 75.39% |
| ratio of reflectivity of primary image to reflectivity of secondary image (C) | incident angle =38° | 6.39 | 6.05 | 9.71 | 11.46 | 12.28 |
| | incident angle =45° | 12.95 | 12.11 | 19.65 | 24.13 | 26.05 |
| | incident angle =55° | 304.33 | 283.62 | 444.07 | 549.67 | 574.50 |
| | incident angle =65° | 32.05 | 30.24 | 43.26 | 60.54 | 59.88 |
| | incident angle =75° | 8.67 | 8.34 | 10.68 | 15.26 | 14.41 |
| | incident angle =85° | 10.05 | 9.82 | 11.64 | 15.76 | 14.99 |
| visible light transmittance (TL) | | 74.76% | 74.78% | 72.48% | 71.81% | 72.37% |
| reflectivity difference (Range) | | 5.15% | 2.90% | 4.35% | 2.10% | 2.12% |
| reflected color | value of a | 1.38 | 2.28 | -0.28 | -1.00 | -0.10 |
| | value of b | 0.77 | -7.27 | 0.17 | -2.70 | 0.40 |

The measurement results of embodiments 3-6 are illustrated in Table 2.

**Table 2: measurement results of head-up display glass of embodiments 3-6**

| | | embodiment 3 | embodiment 4 | embodiment 5 | embodiment 6 |
|---|---|---|---|---|---|
| reflectivity (Rp) | incident angle =38° | 15.04% | 13.51% | 14.04% | 14.70% |
| | incident angle =45° | 15.68% | 14.04% | 15.50% | 15.07% |
| | incident angle =55° | 18.83% | 16.83% | 19.59% | 17.90% |
| | incident angle =65° | 26.47% | 24.22% | 27.67% | 25.43% |
| | incident angle =75° | 43.10% | 41.23% | 44.20% | 42.25% |
| | incident angle =85° | 75.69% | 74.89% | 76.20% | 75.33% |
| ratio of reflectivity of primary image to reflectivity of secondary image (C) | incident angle =38° | 12.03 | 10.30 | 10.83 | 11.66 |
| | incident angle =45° | 25.14 | 21.54 | 24.62 | 23.79 |
| | incident angle =55° | 567.82 | 493.57 | 600.19 | 527.75 |
| | incident angle =65° | 61.69 | 53.01 | 66.63 | 57.50 |
| | incident angle =75° | 15.07 | 13.40 | 16.14 | 14.26 |
| | incident angle =85° | 15.59 | 14.35 | 13.36 | 14.93 |
| visible light transmittance (TL) | | 71.52% | 72.70% | 73.23% | 70.84% |
| reflectivity difference (Range) | | 1.03 | 1.86 | 5.62 | 4.77 |
| reflected color | value of a | -0.60 | -0.98 | -0.16 | -2.80 |
| | value of b | -2.48 | -0.23 | 2.44 | -2.96 |

As can be seen from tables 1 and 2, in comparative example 1, the transparent nanofilm with the double-layer structure is adopted. The reflectivity (Rp) of comparative example 1 is smaller than the reflectivity (Rp) of each of embodiments 1-6, at any incident angle in the range of 38°-85°. The reflectivity (Rp) of comparative example 1 is significantly smaller than the reflectivity (Rp) of each of embodiments 1-6, especially at the incident angle in the range of 55°-75°. At the incident angle of 38°, 55°, 65°, or 75°, the ratio of reflectivity of primary image to reflectivity of secondary image (C) of comparative example 1 is less than 10, less than 480, less than 45, or less than 10, respectively. The value of a of the reflected color of comparative example 1 is greater than 1. As can be seen, in comparative example 1, the HUD image cannot meet the comprehensive requirements such as a high ratio of reflectivity, display in neutral color as much as possible, and a larger field of view, and the head-up display glass of comparative example 1 does not have an excellent apparent color.

In comparative example 2, the transparent nanofilm with the three-layer structure is adopted. The reflectivity (Rp) of comparative example 2 is smaller than the reflectivity (Rp) of each of embodiments 1-6, at any incident angle in the range of 38°-85°. The reflectivity (Rp) of comparative example 2 is significantly smaller than the reflectivity (Rp) of each of embodiments 1-6, especially at the incident angle in the range of 55°-75°. At the incident angle of 38°, 55°, 65°, 75°, or 85°, the ratio of reflectivity of primary image to reflectivity of secondary image (C) of comparative example 2 is less than 10, less than 480, less than 45, less than 10, or less than 10, respectively. The value of a of the reflected color of comparative example 1 is greater than 2. As can be seen, in comparative example 2, the HUD image cannot meet the comprehensive requirements such as a high ratio of reflectivity, display in neutral color as much as possible, and a larger field of view and the head-up display glass of comparative example 2 does not have an excellent apparent color, and part of the measurement results of comparative example 2 is even worse than comparative example 1.

In comparative example 3, the transparent nanofilm with the four-layer structure is adopted. The reflectivity (Rp) of comparative example 1 is smaller than the reflectivity (Rp) of each of embodiments 1-6, at any incident angle in the range of 38°-85°. At the incident angle of 38°, 55°, or 65°, the ratio of reflectivity of primary image to reflectivity of secondary image (C) of comparative example 1 is less than 10, less than 480, or less than 45, respectively. As can be seen, in comparative example 3, the HUD image cannot meet the comprehensive requirements such as a high ratio of reflectivity, display in neutral color as much as possible, and a larger field of view.

In embodiments 1-6, the transparent nanofilm 12 with a five-layer structure is adopted, and the HUD image can meet the comprehensive requirements such as a high ratio of reflectivity, display in neutral color as much as possible, and a larger field of view and the head-up display glass 10 of each of embodiments 1-6 has an excellent apparent color. The head-up display glass of each of embodiment 1, embodiment 3, and embodiment 5 has a ratio of reflectivity of primary image to reflectivity of secondary image (C) greater than or equal to 60 at an incident angle of 65°. The reflectivity difference of each of embodiments 1-4 to P-polarized light emitted on the head-up display glass 10 at an incident angle of 65° in the wavelength range of 460nm to 630nm is less than or equal to 3%, or even less than or equal to 2%. The head-up display glass 10 of each of embodiments 2-4 has an excellent neutral apparent color.

In the description of this specification, the reference terms "specific embodiment", "specific example", and the like mean that specific characteristics, structures, materials, or features described in connection with the embodiment or example are included in at least one embodiment or example of the disclosure. In this specification, the schematic expression of the above terms does not necessarily refer to the same embodiments or examples.

Although embodiments of the disclosure have been shown and described, it will be understood by those of ordinary skill in the art that various changes, modifications, substitutions, and variations may be made to these embodiments without departing from the principles and purposes of the disclosure. The scope of the disclosure is defined by the claims and their equivalents.

## Claims

1. Head-up display glass, comprising an outer surface and an inner surface opposite to the outer surface, wherein a transparent nanofilm used for reflecting P-polarized light is disposed on the inner surface, and the transparent nanofilm comprises a first high-refractive-index-layer, a second high-refractive-index-layer, a first low-refractive-index-layer, a third high-refractive-index-layer, and a second low-refractive-index-layer which are sequentially stacked on the inner surface, and wherein a refractive index of each of the first high-refractive-index-layer, the second high-refractive-index-layer, and the third high-refractive-index-layer is greater than 1.8, and a refractive index of each of the first low-refractive-index-layer and the second low-refractive-index-layer is less than or equal to 1.8.

2. The head-up display glass of claim 1, wherein the refractive index of the first high-refractive-index-layer is lower than the refractive index of the second high-refractive-index-layer, and a difference between the refractive index of the first high-refractive-index-layer and the refractive index of the second high-refractive-index-layer is greater than or equal to 0.3.

3. The head-up display glass of claim 1, wherein the head-up display glass has a reflectivity of at least 13% to P-polarized light emitted at an incident angle between 38° and 85°.

4. The head-up display glass of claim 1, wherein the head-up display glass has a reflectivity of at least 16% to P-polarized light emitted at an incident angle between 55° and 85°.

5. The head-up display glass of claim 1, wherein the head-up display glass has a reflectivity of at least 18% to P-polarized light emitted at an incident angle of 65°.

6. The head-up display glass of claim 5, wherein a reflectivity difference to P-polarized light emitted on the head-up display glass at an incident angle of 65° in a wavelength range of 460nm-630nm is less than or equal to 6%.

7. The head-up display glass of any of claims 1 to 6, wherein the first low-refractive-index-layer has a thickness between 130nm and 200nm, the third high-refractive-index-layer has a thickness between 20nm and 80nm, and the second low-refractive-index-layer has a thickness between 80nm and 130nm.

8. The head-up display glass of any of claims 1 to 6, wherein the first high-refractive-index-layer has a thickness between 25nm and 75nm, the first high-refractive-index-layer has a thickness between 85nm and 145nm, or the first high-refractive-index-layer has a thickness greater than or equal to 200nm.

9. The head-up display glass of any of claims 1 to 6, wherein the second high-refractive-index-layer has a thickness between 5nm and 35nm, the second high-refractive-index-layer has a thickness between 80nm and 145nm, or the second high-refractive-index-layer has a thickness between 190nm and 230nm.

10. The head-up display glass of any of claims 1 to 6, wherein the first high-refractive-index-layer has a thickness between 85nm and 145nm and the second high-refractive-index-layer has a thickness between 5nm and 35nm.

11. The head-up display glass of any of claims 1 to 6, wherein the first high-refractive-index-layer has a thickness between 85nm and 145nm and the second high-refractive-index-layer has a thickness between 190nm and 230nm.

12. The head-up display glass of any of claims 1 to 6, wherein the first high-refractive-index-layer has a thickness between 25nm and 75nm and the second high-refractive-index-layer has a thickness between 80nm and 145nm.

13. The head-up display glass of any of claims 1 to 6, wherein the first high-refractive-index-layer has a thickness between 25nm and 75nm and the second high-refractive-index-layer has a thickness between 190nm and 230nm.

14. The head-up display glass of any of claims 1 to 6, wherein the head-up display glass comprises laminated glass, the laminated glass comprises outer glass, inner glass, and an intermediate layer sandwiched between the outer glass and the inner glass, the outer surface is a surface of the outer glass away from the intermediate layer, the inner surface is a surface of the inner glass away from the intermediate layer, the outer glass is tinted glass and/or the intermediate layer is a colored intermediate layer, the head-up display glass has a visible light transmittance greater than or equal to 70%.

15. The head-up display glass of any of claims 1 to 6, wherein the head-up display glass further comprises one or more of: an anti-fingerprint film, a heat insulating film, and an electric heating film.

16. A head-up display system, comprising the head-up display glass of any of claims 1 to 15 and a projection device configured to emit projection light containing P-polarized light, wherein a proportion of the P-polarized light in the projection light is greater than or equal to 80%, and the projection light is emitted on the transparent nanofilm at an incident angle between 38° and 85°.

17. The head-up display system of claim 16, wherein the projection light is reflected on the transparent nanofilm to form a primary head-up display image, and reflected on the outer surface to form a secondary head-up display image, and a ratio of a reflectivity of the primary head-up display image to a reflectivity of the secondary head-up display image is greater than 10.

18. The head-up display system of claim 17, wherein the ratio of the reflectivity of the primary head-up display image to the reflectivity of the secondary head-up display image is greater than 480 when the projection light is emitted on the head-up display glass at an incident angle of 55°.

19. The head-up display system of claim 17, wherein the ratio of the reflectivity of the primary head-up display image to the reflectivity of the secondary head-up display image is greater than 45 when the projection light is emitted on the head-up display glass at an incident angle of 65°.

20. The head-up display system of claim 17, wherein when the light of a D65 light source is emitted on the head-up display glass at an incident angle of 65° and measured from the outer surface, a reflected color of the head-up display glass has a value of *a* less than or equal to 1 and a value of *b* less than or equal to 2.5 in a color space Lab.
